# EUROPÄISCHE PATENTSCHRIFT

(11) **EP 2 726 756 B1**
(45) Veröffentlichungstag und Bekanntmachung des Hinweises auf die Patenterteilung: **13.06.2018**
(21) Anmeldenummer: 12728545.0
(22) Anmeldetag: 19.06.2012
(51) Int. Cl.: F16H 1/28, B60J 5/10

(54) **VERSTELLANTRIEB FÜR EIN FAHRZEUG, INSBESONDERE HECKKLAPPENANTRIEB**
ADJUSTMENT DRIVE FOR A VEHICLE, IN PARTICULAR TAILGATE DRIVE
ENTRAÎNEMENT DE RÉGLAGE POUR UN VÉHICULE, NOTAMMENT ENTRAÎNEMENT DE HAYON

(30) Priorität: 01.07.2011 DE 102011078518
(43) Veröffentlichungstag der Anmeldung: 07.05.2014
(73) Patentinhaber: Robert Bosch GmbH, 70442 Stuttgart (DE)
(72) Erfinder: OBERLE, Hans-Juergen, 76437 Rastatt (DE); SCHWENDEMANN, Franz, 77833 Ottersweier (DE)
(86) Internationale Anmeldenummer: PCT/EP2012/061674
(87) Internationale Veröffentlichungsnummer: WO 2013/004484

(56) Entgegenhaltungen:
- EP-A2- 1 489 337
- DE-A1- 19 712 516
- JP-A- 60 121 350
- SU-A1- 1 427 127

## Beschreibung

### Stand der Technik

Die vorliegende Erfindung betrifft einen Verstellantrieb, insbesondere einen Heckklappenantrieb, mit einem Lagerdeckel, der eine Lagerfläche zum Lagern einer abtriebsseitigen Getriebeanordnung aufweist, wobei die abtriebsseitige Getriebeanordnung um eine Abtriebsachse drehbar ist, wobei die Lagerfläche konzentrisch um eine Lagerdeckelachse angeordnet ist, wobei am Lagerdeckel antriebsseitig ein Getriebegehäuse zum Lagern einer antriebsseitigen Getriebeanordnung und/oder eines Antriebsmotors vorgesehen ist. Die vorliegende Erfindung betrifft weiterhin einen insbesondere erfindungsgemäßen Verstellantrieb mit dem Lagerdeckel und der abtriebsseitigen Getriebeanordnung, wobei am Lagerdeckel abtriebsseitig ein Befestigungsbauteil zur Befestigung des Verstellantriebs vorgesehen ist.

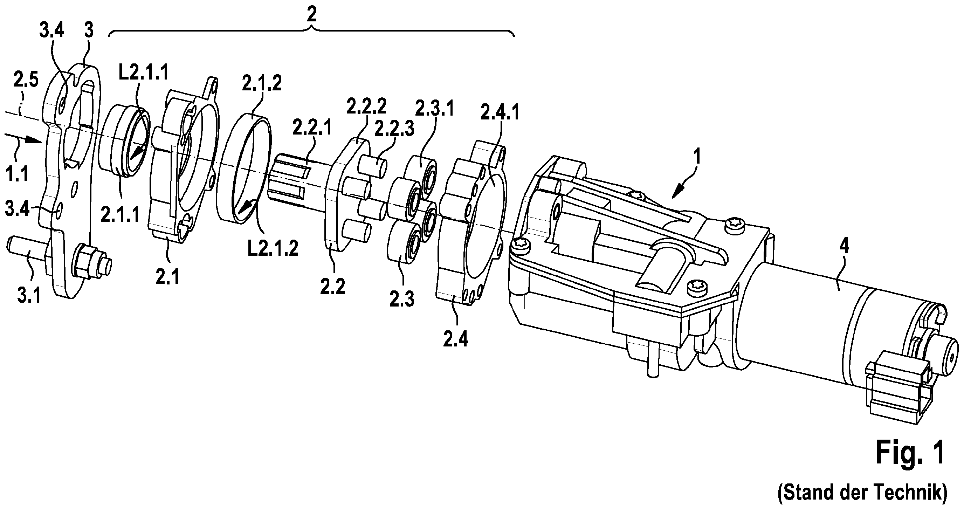

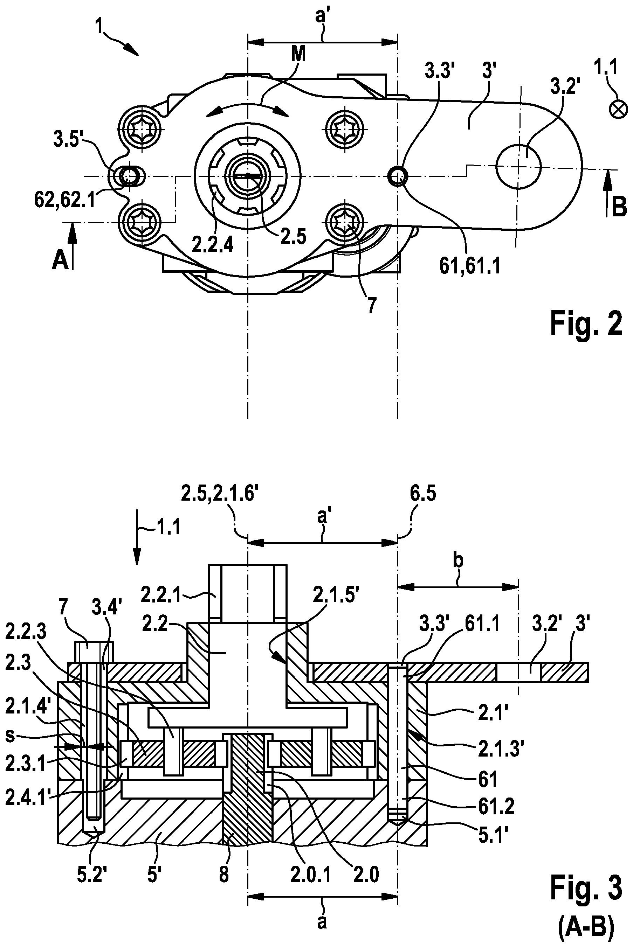

Zum Verstellen von Komponenten, beispielsweise einer Heckklappe eines Fahrzeugs, eines Schiebedachs oder insbesondere zur Höhenverstellung oder Neigungsverstellung eines Sitzes, werden häufig Verstellantriebe benötigt, die eine hohe Untersetzung aufweisen und ein hohes Drehmoment übertragen. Häufig werden hierfür Planetengetriebe verwendet, wobei oftmals mehrere Getriebestufen nacheinander angeordnet werden. Das Abtriebsprofil (2.2.1, s. **Fig. 1****,** **3**) des Planetengetriebes stellt dabei die kundenseitige Schnittstelle dar.

Stirnseitig werden solche Verstellantriebe mit einem Lagerdeckel verschlossen, der zum Lagern von Getriebebauteilen der letzten Getriebestufe vorgesehen ist. Abtriebsseitig ist ein Befestigungsbauteil, insbesondere ein Befestigungsblech, am Lagerdeckel vorgesehen. Zum Abstützen des abtriebsseitigen Drehmomentes weist das Befestigungsbauteil eine Befestigungsschnittstelle auf, hier eine Bohrung, mit der es beispielsweise mittels einer Schraube, insbesondere an der zu verstellenden Komponente, befestigbar ist. Einen solchen Verstellantrieb zeigt beispielhaft die **Fig. 1****.** Die EP-A-1489337 zeigt auch einen Antrieb, der zum Verstellen einer Komponente geeignet ist. Bei einem solchen Verstellantrieb ist die Toleranzkette aufgrund mehrerer hintereinander angeordneter Getriebestufen sehr groß. Zudem besteht ein notwendiges Spiel zwischen den Getriebebauteilen. Dadurch ist der Abstand zwischen der Befestigungsschnittstelle und einer Abtriebsachse des abtriebsseitigen Getriebes beziehungsweise dem Abtriebsprofil variabel, wodurch die Montage des Heckklappenantriebs erschwert ist.

### Offenbarung der Erfindung

Aufgabe der Erfindung ist es, einen Verstellantrieb zum Antrieb einer Komponente, insbesondere eines Fahrzeugs, zu schaffen, der im Vergleich zu herkömmlichen Verstellantrieben ein verringertes Spiel und/oder eine kleinere Toleranzkette aufweist, und somit eine höhere Güte, insbesondere hinsichtlich des Abstandes der kundenseitigen Befestigungsschnittstelle zu einer Abtriebsachse, und der zudem sehr kostengünstig herstellbar und leicht montierbar ist.

Die Aufgabe wird gelöst mit einem Verstellantrieb gemäß Anspruch 1. Der Verstellantrieb weist einen Lagerdeckel auf, der eine Lagerfläche zum Lagern einer abtriebsseitigen Getriebeanordnung aufweist, wobei die Getriebeanordnung um eine Abtriebsachse drehbar ist, wobei die Lagerfläche konzentrisch um eine Lagerdeckelachse angeordnet ist, wobei am Lagerdeckel antriebsseitig ein Getriebegehäuse zum Lagern einer antriebsseitigen Getriebeanordnung und/oder eines Antriebsmotors vorgesehen ist, und wobei der Lagerdeckel ein Referenzelement umfasst, welches einen definierten Abstand zur Lagerdeckelachse aufweist, und an dem das Getriebegehäuse angeordnet ist.

Da die abtriebsseitige Getriebeanordnung an der konzentrisch um die Lagerdeckelachse angeordneten Lagerfläche des Lagerdeckels gelagert ist, und da das Referenzelement zum Anordnen des Getriebegehäuses einen definierten Abstand zu dieser Lagerdeckelachse aufweist, ist das Spiel zwischen dem Getriebegehäuse und der Abtriebsachse des abtriebsseitigen Getriebes durch das insbesondere notwendige Spiel zwischen dem Lagerdeckel und dem abtriebsseitigen Getriebe und durch das Spiel zwischen dem Lagerdeckel und dem Getriebegehäuse bestimmt, und unabhängig von einem Spiel zwischen Getriebe- und/oder Gehäusebauteilen vorgeschalteter Getriebestufen, so dass die Toleranzkette erheblich verringert ist. Erfindungsgemäß ist am Lagerdeckel abtriebsseitig ein Befestigungsbauteil zur Befestigung des Verstellantriebs vorgesehen, wobei der Lagerdeckel ein Referenzelement umfasst, welches einen definierten Abstand zur Lagerdeckelachse aufweist, und an dem das Befestigungsbauteil angeordnet ist.

Da die abtriebsseitige Getriebeanordnung an der konzentrisch um die Lagerdeckelachse angeordneten Lagerfläche des Lagerdeckels gelagert ist, und da das Referenzelement zum Anordnen des Befestigungsbauteils einen definierten Abstand zu dieser Lagerdeckelachse aufweist, ist das Spiel zwischen einer am Befestigungsbauteil angeordneten Befestigungsschnittstelle und der Abtriebsachse des abtriebsseitigen Getriebes durch das insbesondere notwendige Spiel zwischen dem Lagerdeckel und dem abtriebsseitigen Getriebe und durch das Spiel zwischen dem Lagerdeckel und dem Befestigungsbauteil bestimmt. Die Toleranzkette ist daher auch im Vergleich zur erstgenannten Ausführungsform noch weiter verringert.

Bevorzugt ist das Befestigungsbauteil abtriebsseitig des Lagerdeckels und das Getriebegehäuse antriebsseitig des Lagerdeckels angeordnet. Besonders bevorzugt sind sowohl das Befestigungsbauteil als auch das Getriebegehäuse jeweils an einem Referenzelement angeordnet.

Am Befestigungsbauteil und/oder am Getriebegehäuse ist bevorzugt ein zum Referenzelement beziehungsweise zur Kontur des Referenzelementes korrespondierendes Gegenreferenzelement angeordnet, welches mit dem Referenzelement im montierten Zustand zusammenwirkt.

Als Referenzelement in Sinne der Erfindung eignet sich jedes Mittel, welches den definierten Abstand zur Lagerdeckelachse aufweist und gleichzeitig ein nahezu spielfreies Anordnen des Gegenreferenzelementes des Befestigungsbauteils und/oder des Getriebegehäuses am Lagerdeckel ermöglicht. Unter einem nahezu spielfreien Anordnen ist dabei zu verstehen, dass das Gegenreferenzelement und das Referenzelement gerade soviel Spiel zueinander aufweisen, das eine insbesondere maschinenfreie Montage des Befestigungsbauteils und/oder des Getriebegehäuses am Lagerdeckel möglich ist.

Geeignet sind daher beispielsweise Anformungen oder Ausnehmungen mit definierter und sehr genau herstellbarer Kontur, insbesondere ein Zapfen oder eine Bohrung. Sofern dass Referenzelement als ein Anformung ausgebildet ist, ist das Gegenreferenzelement als Ausnehmung ausgebildet oder umgekehrt. Es ist besonders bevorzugt, dass das Referenzelement als Zapfen und das Gegenreferenzelement als Bohrung ausgebildet ist.

Es ist weiterhin bevorzugt, dass der Lagerdeckel zwei als Zapfen ausgebildete Referenzelemente aufweist, wobei der erste Zapfen abtriebsseitig des Lagerdeckels zum Anordnen des Befestigungsbauteils vorgesehen ist, und wobei der zweite Zapfen antriebsseitig des Lagerdeckels zum Anordnen des Getriebegehäuses vorgesehen ist. Die beiden Referenzelemente sind jeweils durch einen Passstift gebildet, der passgenau in eine Bohrung des Lagerdeckels eingefügt ist, und der somit quasieinstückig in den Lagerdeckel gefügt ist. Dabei bildet das offene Ende des in die Bohrung gefügten Passstiftes jeweils den Zapfen. Als Referenzelemente sind aber auch einstückig mit dem Lagerdeckel ausgebildete Anformungen bevorzugt.

Besonders bevorzugt sind das Referenzelement, an dem das Befestigungsbauteil am Lagerdeckel angeordnet ist, sowie das Referenzelement, an dem das Getriebegehäuse am Lagerdeckel angeordnet ist, durch dasselbe Referenzbauteil gebildet. Ganz besonders bevorzugt sind die beiden Referenzelemente durch denselben Passstift gebildet, der passgenau in eine Durchbohrung des Lagerdeckels eingefügt ist und dessen beide offene Enden jeweils einen der beiden Zapfen bilden.

Diese Ausführungsform hat den Vorteil, dass der Abstand zwischen dem Passstift und der Lagerdeckelachse abtriebsseitig des Lagerdeckels gleich dem Abstand zwischen dem Passstift und der Lagerdeckelachse antriebsseitig des Lagerdeckels ist. Dadurch ist die Abtriebsachse der abtriebsseitigen Getriebeanordnung, deren Lage vor allem durch das insbesondere notwendige Spiel zwischen dem Lagerdeckel und der abtriebsseitigen Getriebeanordnung bestimmt ist, nahezu gleich der Lagerdeckelachse. Im montierten Zustand ist daher der Abstand zwischen dem Passstift und der Abtriebsachse abtriebsseitig des Lagerdeckels nahezu gleich dem Abstand zwischen dem Passstift und der Abtriebsachse antriebsseitig des Lagerdeckels.

Dadurch ist ein Abstand zwischen einer Befestigungsschnittstelle des Verstellantriebs, die an dem Befestigungsbauteil angeordnet ist, und der Abtriebsachse des abtriebsseitigen Getriebes nahezu unabhängig von einer Toleranzkette zwischen antriebsseitigen Getriebe- und/oder Gehäusebauteilen des Verstellantriebs und/oder einem Antriebsmotor.

Bevorzugt ist der Passstift in den Lagerdeckel eingepresst. Ein solches Einpressen ermöglicht eine sehr genaue Positionierung des Passstiftes im Lagerdeckel und ist mit herkömmlichen Verfahren kostengünstig durchführbar.

Das Befestigungsbauteil und/oder das Getriebegehäuse sind bevorzugt mittels Befestigungsmitteln form- und/oder kraftschlüssig am Lagerdeckel befestigt, insbesondere mittels Schrauben und/oder Nieten. Prinzipiell ist aber auch ein stoffschlüssiges Verbinden des Befestigungsbauteil und/oder des Getriebegehäuses am Lagerdeckel möglich, beispielsweise mittels Schweißen, Löten oder Kleben.

Die abtriebsseitige Getriebeanordnung ist bevorzugt als Planetengetriebe ausgebildet, so dass sie eine hohe Untersetzung und somit die Übertragung eines großen Drehmomentes ermöglicht. Weiterhin bevorzugt bildet der Lagerdeckel ein Hohlrad des Planetengetriebes, so dass das Hohlrad eingespart wird und die Bauteilezahl reduziert ist.

Der Verstellantrieb weist neben der abtriebsseitigen Getriebeanordnung bevorzugt eine antriebsseitige Getriebeanordnung auf, die die abtriebsseitige Getriebeanordnung antreibt. Sofern der Verstellantrieb diese antriebsseitige Getriebeanordnung umfasst, wird diese mittels eines Antriebsmotors angetrieben. Andernfalls wird die abtriebsseitige Getriebeanordnung mittels des Antriebsmotors angetrieben. Der Antriebsmotor ist bevorzugt ein Elektromotor, insbesondere ein Gleichstrommotor.

Im Folgenden wird die Erfindung anhand von **Figuren** beschrieben. Die **Figuren** sind lediglich beispielhaft und schränken den allgemeinen Erfindungsgedanken nicht ein.
- **Fig. 1**: zeigt schematisch einen Heckklappenantrieb gemäß dem Stand der Technik,
- **Fig. 2**: zeigt eine Stirnseite eines erfindungsgemäßen Heckklappenantriebs, und
- **Fig. 3**: zeigt einen Schnitt durch den erfindungsgemäßen Heckklappenantrieb der **Fig. 2****.**

**Fig. 1** zeigt schematisch einen Verstellantrieb 1 für eine Komponente, hier einen Heckklappenantrieb eines Fahrzeugs, gemäß dem Stand der Technik. Im Folgenden werden die Begriffe Verstellantrieb und Heckklappenantrieb synonym verwendet. Der Heckklappenantrieb 1 weist mehrere Getriebestufen (nicht dargestellt) auf, wobei die letzte, abtriebsseitige Getriebeanordnung 2 ein Planetengetriebe ist. Diese Getriebeanordnung 2 ist in der **Fig. 1** explosionsartig gezeigt. Im Folgenden werden die Begriffe abtriebsseitige Getriebeanordnung 2 und Planetengetriebe synonym verwendet.

Zum Antrieb des Heckklappenantriebs 1 ist als Antriebsmotor 4 ein Elektromotor vorgesehen. Im Folgenden werden die Begriffe Antriebsmotor 4 und Elektromotor synonym verwendet. Weiterhin zeigt die **Fig. 1** ein Befestigungsbauteil 3, welches hier als Befestigungsblech ausgebildet ist, und welches die Schnittstelle zum Verstellen der Heckklappe (nicht dargestellt) bildet. Dafür ist ein Bolzen 3.1 in einer Befestigungsbohrung 3.2 (s. **Fig. 2**) im Befestigungsbauteil 3 lösbar angeordnet. Im Folgenden werden die Begriffe Befestigungsbauteil 3 und Befestigungsblech synonym verwendet.

Das Planetengetriebe 2 umfasst einen Planetenträger 2.2, der um eine Drehachse 2.5 drehbar ist. Am Planetenträger 2.2 sind hier beispielhaft vier Lagerbolzen 2.2.3 vorgesehen, an denen jeweils ein Planetenrad 2.3 drehbar angeordnet ist. Das Planetengetriebe 2 umfasst weiterhin ein Sonnenrad 2.0 (s. **Fig. 3**), dass koaxial zur Drehachse 2.5 angeordnet ist und sich bei Antrieb des Elektromotors 1 dreht. Das Sonnenrad 2.0 weist eine Verzahnung 2.0.1 (s. **Fig. 3**) auf, die mit einer Außenverzahnung 2.3.1 der Planetenräder 2.3 in Eingriff ist. Im Rahmen der **Fig. 1** sind die Verzahnungen der Übersichtlichkeit halber lediglich als glatte Flächen dargestellt. Beim Drehen des Sonnenrades 2.0 rollen sich die Außenverzahnungen 2.3.1 der Planetenräder 2.3 an einer Innenverzahnung 2.4.1 eines Hohlrades 2.4 ab. Dabei wird der Planetenträger 2.2 um die Drehachse 2.5 gedreht.

Der Planetenträger 2.2 weist eine erste Lagergegenfläche 2.2.1 auf, die sich an einer ersten Lagerfläche L2.1.1 eines ersten Lagerbauteils 2.1.1 abstützt. Weiterhin weist der Planetenträger 2.2 eine zweite Lagergegenfläche 2.2.2 auf, die sich an einer zweiten Lagerfläche L2.1.2 eines zweiten Lagerbauteils 2.1.2 abstützt. Dabei sind das erste Lagerbauteil 2.1.1 sowie das zweite Lagerbauteil 2.1.2 an einem Lagerdeckel 2.1 angeordnet, wobei der Lagerdeckel 2.1 zum stirnseitigen Verschließen des Heckklappenantriebs 1 vorgesehen ist. Die Stirnseite des Heckklappenantriebs 1 ist durch einen Pfeil 1.1 gezeigt.

Das Befestigungsblech 3 ist drehfest am Lagerdeckel 2.1 befestigbar. Zum Befestigen des Befestigungsbleches 3 am Lagerdeckel 2.1 sind Schraubenbohrungen 3.4 vorgesehen, in die Schrauben einfügbar sind.

Bei dem hier dargestellten Planetengetriebe 2 sind die erste und die zweite Lagergegenfläche 2.2.1, 2.2.2 des Planetenträgers 2.2 auf der den Planetenrädern 2.3 abgewandten Seite angeordnet. Daher ist dieses Planetengetriebe 2 ein einseitig gelagertes Planetengetriebe 2. Die Erfindung ist aber nicht auf ein einseitig gelagertes Planetengetriebe 2 beschränkt, sondern auch für ein beidseitig gelagertes Planetengetriebe 2 verwendbar, bei dem die Planetenräder 2.3 zwischen der ersten und der zweiten Lagergegenfläche 2.2.1, 2.2.2 angeordnet sind. Die Erfindung ist auch nicht auf einen Verstellantrieb 1 mit einem Planetengetriebe 2 als abtriebsseitige Getriebestufe beschränkt, sondern eignet sich auch zur Anwendung anderer Getriebestufen als letzte Getriebestufe, beispielsweise eines Schneckengetriebes oder ähnlich.

**Fig. 2** zeigt eine Stirnseite eines erfindungsgemäßen Verstellantriebs 1. Die Stirnseite ist hier durch einen Pfeil 1.1 gezeigt.

Sichtbar ist auch hier das als Befestigungsblech ausgebildete Befestigungsbauteil 3', an dem ebenfalls eine Befestigungsbohrung 3.2 als Kundenschnittstelle zum Befestigen des Verstellantriebs 1, insbesondere an der zu verstellenden Komponente, vorgesehen ist. Das Befestigungsblech 3' ist mittels Schrauben 7 an dem Lagerdeckel 2.1' (s. **Fig. 3**) des Verstellantriebs 1 insbesondere lösbar befestigt.

Der erfindungsgemäße Verstellantrieb 1 weist aber im Gegensatz zum Verstellantrieb der **Fig. 1** Referenzelemente 61.1, 61.2, 62.1 auf, mit denen die Toleranzkette reduziert ist. Sichtbar in **Fig. 2** sind die offenen Enden zweier als Passstifte ausgebildeter Referenzbauteile 61, 62, die die Referenzelemente 61.1, 62.1 zum Anordnen des Befestigungsbleches 3' bilden. Diese Referenzelemente 61.1, 62.1 sind als Zapfen ausgebildet. Als Gegenreferenzelemente 3.3', 3.5' sind im Befestigungsblech 3' Bohrungen vorgesehen. Das Befestigungsblech 3' des Verstellantriebs der **Fig. 2** und **3** ist daher gegenüber dem Befestigungsblech 3 des Verstellantriebs der **Fig. 1** mit einem Strich gekennzeichnet.

Dabei korrespondiert die Kontur des ersten als Zapfen ausgebildeten Referenzelementes 61.1 mit der Kontur des ersten als kreisrunde Bohrung ausgebildeten Gegenreferenzelementes 3.3. Diese Bohrung 3.3 ist gerade so groß vorgesehen, dass eine insbesondere maschinenfreie Montage des Befestigungsbleches 3' an den Lagerdeckel 2.1' möglich ist. Dadurch ist der Lagerdeckel 2.1' nahezu spielfrei an das Befestigungsblech 3' montierbar. Das erste Referenzelement 61.1 weist einen definierten Abstand a zu einer Lagerdeckelachse 2.1.6' des Lagerdeckels 2.1' auf, so dass auch das Befestigungsblech 3' in einer definierten Position am Lagerdeckel 2.1' befestigt ist (s. weiteres in der Beschreibung zu **Fig. 3**).

Im Gegensatz dazu ist das dritte Gegenreferenzelement 3.5' für das dritte Referenzelement 62.1 als Langloch ausgebildet, um Überbestimmtheit zu vermeiden. Dadurch kann einerseits über Flachseiten des als Langloch ausgebildeten dritten Gegenreferenzelementes 3.5' ein aus dem Abtrieb resultierendes Drehmoment M abgestütz, und andererseits eine Abstandstoleranz der beiden Referenzelemente 61.1, 62.1 zueinander ausgeglichen werden.

In einer bevorzugten Ausführungsform ist das Befestigungsblech 3' mittels einer Presspassung an das erste und/oder dritte Referenzelement 61.1, 62.1 angeordnet. Gegenüber einem maschinenfreien Fügen hat das Presspassen zum Einen den Vorteil, dass es spielfrei erfolgt. Zum Anderen kann sich das Befestigungsblech 3' dann auch nicht mehr vom Lagerdeckel 2.1' lösen, was in der Montage des Verstellantriebs 1 vorteilhaft ist, beispielsweise bei einem Transport einer aus Lagerdeckel 2.1', Referenzbauteil (-en) 61, 62 und Befestigungsblech 3' bestehenden Vorbaugruppe. Das Einpressen eines der Referenzelemente 61.1, 62.1 in das Befestigungsblech 3' erfolgt bevorzugt gemeinsam mit dem Einpressen des Passstiftes 61, 62 in den Lagerdeckel 2.1, so dass es keiner zusätzlichen Maschinentechnik bedarf. Bei der Endmontage wird das Befestigungsblech 3' bevorzugt an dem Lagerdeckel 2.1' und/oder Getriebegehäuse 5' befestigt.

Die **Fig. 3** zeigt einen Schnitt **A-B** durch den erfindungsgemäßen Verstellantrieb 1 der **Fig. 2****.** Sichtbar ist hier die abtriebsseitige Getriebeanordnung 2 mit dem Lagerdeckel 2.1', das am Lagerdeckel 2.1' abtriebsseitig angeordnete Befestigungsblech 3' und ein am Lagerdeckel 2.1' antriebsseitig angeordnetes Getriebegehäuse 5 für eine vorgeschaltete antriebsseitige Getriebeanordnung, von der nur die die abtriebsseitige Getriebeanordnung 2 antreibende Abtriebswelle 8 gezeigt ist.

Auch der erfindungsgemäße Verstellantrieb 1 weist als abtriebsseitige Getriebeanordnung 2 ein Planetengetriebe auf. Dieses Planetengetriebe 2 unterscheidet sich aber von dem Planetengetriebe 2 der **Fig. 1** darin, dass der Planetenträger 2.2 unmittelbar im Lagerdeckel 2.1' gelagert ist, und der erfindungsgemäße Verstellantrieb 1 daher weder das erste noch das zweite Lagerbauteil 2.1.1, 2.1.2 benötigt. Der Lagerdeckel der abtriebsseitigen Getriebeanordnung der **Fig. 2** und **3** ist daher gegenüber dem Lagerdeckel 2.1 des Verstellantriebs der **Fig. 1** mit einem Strich gekennzeichnet.

Zudem bildet der Lagerdeckel 2.1' des erfindungsgemäßen Verstellantriebs 1 auch das Hohlrad des Planetengetriebes 2, und weist dafür eine Innenverzahnung 2.4.1' auf, mit der die Außenverzahnungen 2.3.1 der Planetenräder 2.3 kämmen. Der erfindungsgemäße Verstellantrieb 1 benötigt daher im Vergleich zum Planetengetriebe 2 der **Fig. 1** auch kein zusätzliches Hohlrad 2.4. Auch dadurch sind die Toleranzkette und das Spiel zwischen den Getriebebauteilen der abtriebsseitigen Getriebeanordnung 2 des erfindungsgemäßen Verstellantriebs 1 im Vergleich zu einer abtriebsseitigen Getriebeanordnung 2 gemäß **Fig. 1** reduziert.

Der Schnitt **A-B** verläuft durch eine Schraube 7, mit der das Befestigungsblech 3' am Lagerdeckel 2.1' und am Getriebegehäuse 5' befestigt ist, durch die Lagerdeckelachse 2.1.6', durch das erste Referenzelement 61.1 und durch die Befestigungsbohrung 3.2'.

Das erste Referenzelement 61.1 ist durch das offene Ende des ersten Passstiftes 61 gebildet, der passgenau in eine Durchbohrung 2.1.3' des Lagerdeckels 2.1' eingepresst ist. Das zweite offene Ende bildet ein zweites als Zapfen ausgebildetes Referenzelement 61.2, welches in einem als Bohrung ausgebildeten zweiten Gegenreferenzelement 5.1' im Getriebegehäuse 5' angeordnet ist. Die Kontur des zweiten Gegenreferenzelementes 5.1' korrespondiert zur Kontur des zweiten Referenzelementes 61.2, analog zu der Kontur des ersten Gegenreferenzelementes 3.3' und des ersten Referenzelementes 61.1. Dadurch ist auch das Getriebegehäuse 5' in einer definierten Position zum Lagerdeckel 2.1' beziehungsweise der Lagerdeckelachse 2.1.6' angeordnet.

Analog zum dritten Gegenreferenzelement 3.5' ist es bevorzugt, auch ein viertes Gegenreferenzelement (nicht gezeigt) im Getriebegehäuse 5' vorzusehen, welches mit einem vierten Referenzelement (nicht gezeigt) zusammenwirkt und als Langloch ausgebildet ist, um eine Überbestimmtheit zu vermeiden. Das vierte Referenzelement ist bevorzugt durch das zweite offene Ende des zweiten Passstiftes 62, der das zweite Referenzelement 62.1 bildet (s. **Fig. 2**), gebildet.

Der Schnitt durch die Schraube 7 zeigt, dass jeweils zwischen einer Schraubendurchführung 3.4' im Befestigungsblech 3', einer Schraubendurchführung 2.1.4' im Lagerdeckel 2.1' und der Schraube 7 ein Spalt s vorgesehen ist. Dabei ist die Schraube 7 durch die Schraubendurchführung 3.4' des Befestigungsblechs 3' und die Schraubendurchführung 2.1.4' des Lagerdeckels 2.1' in eine Schraubenbohrung 5.2' des Getriebegehäuses 5' geführt. Durch diese Verschraubung des Befestigungsblechs 3' am Getriebegehäuse 5' ist sichergestellt, dass die Befestigung keine sich auf einen Achsabstand der abtriebsseitigen Getriebeanordnung 2 auswirkenden Radialkräfte einbringt.

Der Lagerdeckel 2.1' weist eine Lagerfläche 2.1.5' zum Lagern des Planetengetriebes 2 auf, die konzentrisch um die Lagerdeckelachse 2.1.6' angeordnet ist. Das Planetengetriebe 2 ist drehbar um eine Abtriebsachse 2.5 gelagert. Dabei besteht zwischen dem Planetengetriebe 2 und dem Lagerdeckel 2.1' ein insbesondere notwendiges Spiel.

Da das erste Referenzelement 61.1 zum Anordnen des Getriebegehäuses 5' als auch das zweite Referenzelement 61.2 zum Anordnen des Befestigungsbauteils 3' durch dasselbe Referenzbauteil 61 gebildet sind, und das Referenzbauteil 61 einen definierten Abstand a zur Lagerdeckelachse 2.1.6' aufweist, ist das Spiel zwischen dem Getriebegehäuse 5' und der Abtriebsachse 2.5 des Planetengetriebes 2 vor allem durch das insbesondere notwendige Spiel zwischen dem Lagerdeckel 2.1' und dem Planetengetriebe 2 bestimmt.

Ausgehend davon, dass Planetengetriebe 2 aufgrund ihres Aufbaus selbstzentrierend sind, ist die Abtriebsachse 2.5 gleich der Lagerdeckelachse 2.1.6'. Daher sind sowohl der antriebsseitige Abstand a zwischen der Abtriebsachse 2.5 und einer Referenzachse 6.5, um die das erste Referenzbauteil 61 konzentrisch angeordnet ist, als auch der abtriebsseitige Abstand a' zwischen der Abtriebsachse 2.5 und der Referenzachse 6.5 gleich. Somit ist nicht nur der Achsabstand des Abtriebprofils 2.2.1 von der Lagerdeckelachse 2.1.6' überall gleich, sondern auch der Abstand a'+b der Befestigungsbohrung 3.2' von der Lagerdeckelachse 2.1.6'.

Mithilfe des ersten und des zweiten Referenzelementes 61.1, 61.2 ist daher nicht nur die Toleranzkette erheblich verringert. Sondern das Design des Verstellantriebs 1 und seine Montage am Einbauort sowie sein Zusammenbau sind dadurch unabhängig von Schnittstellenmaßen und Achsabständen. Dadurch ist die Positionierbarkeit des Verstellantriebs 1 am Einbauort, und somit die Montage des Verstellantriebs 1 an der zu verstellenden Komponente, erheblich vereinfacht. Zudem treten weniger Verspannungen und Relativbewegungen, die durch Ungenauigkeiten sowohl der Bauteile als auch der Montage verursacht sind, auf. Dadurch ist der Verstellantrieb 1 geringeren Belastungen ausgesetzt. Zudem sind die für den Verstellantrieb 1 erforderliche Antriebsleistung und die Gefahr, dass sich der Verstellantrieb 1 im Betrieb löst, reduziert.

Der erfindungsgemäße Verstellantrieb 1 eignet sich zum Verstellen von vielerlei Komponenten. Er wird bevorzugt in Fahrzeugen, insbesondere zum Verstellen der Heckklappe, zum Verstellen eines Schiebedachs oder zur Höhenverstellung oder Neigungsverstellung eines Sitzes, verwendet.

## Patentansprüche

1. Verstellantrieb (1) zum Verstellen einer Komponente, insbesondere Heckklappenantrieb, mit einem Lagerdeckel (2.1'), der eine Lagerfläche (2.1.5') zum Lagern einer abtriebsseitigen Getriebeanordnung (2) aufweist, wobei die abtriebsseitige Getriebeanordnung (2) um eine Abtriebsachse (2.5) drehbar ist, wobei die Lagerfläche (2.1.5') konzentrisch um eine Lagerdeckelachse (2.1.6') angeordnet ist, wobei am Lagerdeckel (2.1') antriebsseitig ein Getriebegehäuse (5') zum Lagern einer antriebsseitigen Getriebeanordnung (8) und/oder eines Antriebsmotors (4) vorgesehen ist, wobei am Lagerdeckel (2.1') abtriebsseitig ein Befestigungsbauteil (3') zur Befestigung des Verstellantriebs (1) vorgesehen ist, und wobei das Befestigungsbauteil (3') und/oder das Getriebegehäuse (5') mittels Befestigungsmitteln (7) am Lagerdeckel (2.1') befestigt sind, **wobei** der Lagerdeckel (2.1') ein erstes Referenzelement (61.1) umfasst, welches einen definierten Abstand (a) zur Lagerdeckelachse (2.1.6') aufweist, und an dem das Befestigungsbauteil (3') angeordnet ist, und ein zweites Referenzelement (61.2), welches **den** definierten Abstand (a) zur Lagerdeckelachse (2.1.6') aufweist, und an dem das Getriebegehäuse (5') angeordnet ist, **dadurch gekennzeichnet, dass** das Befestigungsbauteil (3') und das Getriebegehäuse (5') an einem ersten als Passstift ausgebildeten Referenzbauteil (61) angeordnet sind, welches die Referenzelemente (61.1, 61.2) bildet, und ein zweites als Passstift ausgebildetes Referenzbauteil (62) als drittes Referenzelement (62.1) in einem als drittes Gegenreferenzelement (3.5') ausgebildetem Langloch zur Anordnung des Befestigungsbauteils (3') angeordnet ist.

2. Verstellantrieb (1) nach Anspruch 1, **dadurch gekennzeichnet, dass** das Befestigungsbauteil (3') zum Abstützen eines abtriebsseitigen Drehmomentes eine Befestigungsschnittstelle aufweist, mit der es an der zu verstellenden Komponente befestigbar ist.

3. Verstellantrieb (1) nach einem der vorherigen Ansprüche, **dadurch gekennzeichnet, dass** die Befestigungsschnittstelle eine Befestigungsbohrung (3.2') ist.

4. Verstellantrieb (1) nach einem der vorherigen Ansprüche, **dadurch gekennzeichnet, dass** das Befestigungsbauteil (3') als ein Befestigungsblech ausgebildet ist.

5. Verstellantrieb (1) nach einem der vorherigen Ansprüche, **dadurch gekennzeichnet, dass** die Referenzelemente (61.1, 61.2) jeweils als eine Anformung ausgebildet sind, insbesondere als Zapfen.

6. Verstellantrieb (1) nach einem der vorherigen Ansprüche, **dadurch gekennzeichnet, dass** das Befestigungsbauteil (3') und/oder das Getriebegehäuse (5') eine zum Referenzelement (61.1, 61.2) korrespondierende Ausnehmung aufweisen.

7. Verstellantrieb (1) nach einem der vorherigen Ansprüche, **dadurch gekennzeichnet, dass** die Flachseiten des Langlochs ein aus dem Abtrieb resultierendes Drehmoment abstützen und andererseits eine Abstandstoleranz der beiden Referenzelemente (61.1, 62.1) zueinander ausgleichen.

8. Verstellantrieb (1) nach einem der vorherigen Ansprüche, **dadurch gekennzeichnet, dass** der Passstift (61) passgenau im Lagerdeckel (2.1') vorgesehen ist.

9. Verstellantrieb (1) nach einem der vorherigen Ansprüche, **dadurch gekennzeichnet, dass** der Passstift (61) in eine Durchbohrung (2.1.3') des Lagerdeckels (2.1') eingepresst ist.

10. Verstellantrieb (1) nach Anspruch 1, **dadurch gekennzeichnet, dass** die Befestigungsmittel (7) Schrauben und/oder Nieten sind.

11. Verstellantrieb (1) nach Anspruch 1, **dadurch gekennzeichnet, dass** die abtriebsseitige Getriebeanordnung (2) ein Planetengetriebe ist, und der Lagerdeckel (2.1') ein Hohlrad des Planetengetriebes (2) bildet.

12. Verstellantrieb (1) nach Anspruch 1, **dadurch gekennzeichnet, dass** die antriebsseitige Getriebeanordnung (8) die abtriebsseitige Getriebeanordnung (2) antreibt.

## Claims

1. Adjustment drive (1) for adjusting a component, in particular tailgate drive, with a bearing cover (2.1') which has a bearing surface (2.1.5') for the mounting of an output-side gearing arrangement (2), wherein the output-side gearing arrangement (2) is rotatable about an output axis (2.5), wherein the bearing surface (2.1.5') is arranged concentrically about a bearing cover axis (2.1.6'), wherein a gearing housing (5') for the mounting of a drive-side gearing arrangement (8) and/or of a drive motor (4) is provided on the drive side of the bearing cover (2.1'), wherein a fastening component (3') for the fastening of the adjustment drive (1) is provided on the output side of the bearing cover (2.1'), and wherein the fastening component (3') and/or the gearing housing (5') are fastened to the bearing cover (2.1') by means of fastening means (7), **wherein** the bearing cover (2.1') comprises a first reference element (61.1) which is at a defined distance (a) from the bearing cover axis (2.1.6') and on which the fastening component (3') is arranged, and a second reference element (61.2) which is **at the** defined distance (a) from the bearing cover axis (2.1.6') and on which the gearing housing (5') is arranged, **characterized in that** the fastening component (3') and the gearing housing (5') are arranged on a first reference component (61) which is designed as a locating pin and forms the reference elements (61.1, 61.2), and a second reference component (62) which is designed as a locating pin is arranged as third reference element (62.1) in an elongated hole, which is designed as a third counter reference element (3.5'), for the arrangement of the fastening component (3').

2. Adjustment drive (1) according to Claim 1, **characterized in that** the fastening component (3') has, for supporting an output-side torque, a fastening interface with which said fastening component is fastenable to the component to be adjusted.

3. Adjustment drive (1) according to either of the preceding claims, **characterized in that** the fastening interface is a fastening bore (3.2').

4. Adjustment drive (1) according to one of the preceding claims, **characterized in that** the fastening component (3') is designed as a fastening plate.

5. Adjustment drive (1) according to one of the preceding claims, **characterized in that** the reference elements (61.1, 61.2) are each designed in the form of a moulding, in particular in the form of a journal.

6. Adjustment drive (1) according to one of the preceding claims, **characterized in that** the fastening component (3') and/or the gearing housing (5') have/has a recess corresponding to the reference element (61.1, 61.2).

7. Adjustment drive (1) according to one of the preceding claims, **characterized in that** the flat sides of the elongated hole support a torque resulting from the output and, on the other hand, compensate for a spacing tolerance of the two reference elements (61.1, 62.1) with respect to each other.

8. Adjustment drive (1) according to one of the preceding claims, **characterized in that** the locating pin (61) is provided in a precisely fitting manner in the bearing cover (2.1').

9. Adjustment drive (1) according to one of the preceding claims, **characterized in that** the locating pin (61) is pressed into a through-bore (2.1.3') in the bearing cover (2.1').

10. Adjustment drive (1) according to Claim 1, **characterized in that** the fastening means (7) are screws and/or rivets.

11. Adjustment drive (1) according to Claim 1, **characterized in that** the output-side gearing arrangement (2) is a planetary gearing, and the bearing cover (2.1') forms a ring gear of the planetary gearing (2).

12. Adjustment drive (1) according to Claim 1, **characterized in that** the drive-side gearing arrangement (8) drives the output-side gearing arrangement (2).

## Revendications

1. Entraînement de réglage (1) pour régler un composant, en particulier un entraînement de hayon arrière, comprenant un couvercle de palier (2.1'), qui présente une surface de palier (2.1.5') pour supporter un agencement de transmission (2) côté prise de force, l'agencement de transmission côté prise de force (2) pouvant tourner autour d'un axe de prise de force (2.5), la surface de palier (2.1.5') étant disposée concentriquement autour d'un axe du couvercle de palier (2.1.6'), un boîtier de transmission (5') pour le support d'un agencement de transmission (8) côté entraînement et/ou d'un moteur d'entraînement (4) étant prévu au niveau du couvercle de palier (2.1') du côté entraînement, un composant de fixation (3') pour la fixation de l'entraînement de réglage (1) étant prévu du côté de la prise de force au niveau du couvercle de palier (2.1') et le composant de fixation (3') et/ou le boîtier de transmission (5') étant fixés par le biais de moyens de fixation (7) sur le couvercle de palier (2.1'), le couvercle de palier (2.1') comprenant un premier élément de référence (61.1) qui présente une distance définie (a) à l'axe du couvercle de palier (2.1.6'), et au niveau duquel est disposé le composant de fixation (3'), et un deuxième élément de référence (61.2) qui présente la distance définie (a) à l'axe du couvercle de palier (2.1.6'), et au niveau duquel est disposé le boîtier de transmission (5'),
**caractérisé en ce que**
le composant de fixation (3') et le boîtier de transmission (5') sont disposés au niveau d'un premier composant de référence (61) réalisé sous forme de goupille d'ajustement, lequel forme les éléments de référence (61.1, 61.2), et un deuxième composant de référence (62) réalisé sous forme de goupille d'ajustement, en tant que troisième élément de référence (62.1), est disposé dans un trou oblong réalisé sous forme de troisième élément de référence conjugué (3.5') pour l'agencement du composant de fixation (3').

2. Entraînement de réglage (1) selon la revendication 1, **caractérisé en ce que** le composant de fixation (3') présente, pour le support d'un couple côté prise de force, une interface de fixation avec laquelle il peut être fixé au composant à régler.

3. Entraînement de réglage (1) selon l'une quelconque des revendications précédentes, **caractérisé en ce que** l'interface de fixation est un alésage de fixation (3.2').

4. Entraînement de réglage (1) selon l'une quelconque des revendications précédentes, **caractérisé en ce que** le composant de fixation (3') est réalisé sous forme de tôle de fixation.

5. Entraînement de réglage (1) selon l'une quelconque des revendications précédentes, **caractérisé en ce que** les éléments de référence (61.1, 61.2) sont réalisés à chaque fois sous forme de pièce façonnée, en particulier sous forme de tourillon.

6. Entraînement de réglage (1) selon l'une quelconque des revendications précédentes, **caractérisé en ce que** le composant de fixation (3') et/ou le boîtier de transmission (5') présentent un évidement correspondant à l'élément de référence (61.1, 61.2).

7. Entraînement de réglage (1) selon l'une quelconque des revendications précédentes, **caractérisé en ce que** les côtés plats du trou oblong supportent un couple résultant de la prise de force et compensent d'autre part une tolérance d'espacement des deux éléments de référence (61.1, 62.1) l'un par rapport à l'autre.

8. Entraînement de réglage (1) selon l'une quelconque des revendications précédentes, **caractérisé en ce que** la goupille d'ajustement (61) est prévue avec un ajustement serré dans le couvercle de palier (2.1').

9. Entraînement de réglage (1) selon l'une quelconque des revendications précédentes, **caractérisé en ce que** la goupille d'ajustement (61) est enfoncée dans un alésage traversant (2.1.3') du couvercle de palier (2.1').

10. Entraînement de réglage (1) selon la revendication 1, **caractérisé en ce que** les moyens de fixation (7) sont des vis et/ou des rivets.

11. Entraînement de réglage (1) selon la revendication 1, **caractérisé en ce que** l'agencement de transmission côté prise de force (2) est une transmission planétaire et le couvercle de palier (2.1') forme une couronne dentée de la transmission planétaire (2).

12. Entraînement de réglage (1) selon la revendication 1, **caractérisé en ce que** l'agencement de transmission côté entraînement (8) entraîne l'agencement de transmission côté prise de force (2) .
